(19) Europäisches Patentamt
European Patent Office
Office européen des brevets

(11) **EP 1 801 398 B1**

(12) **FASCICULE DE BREVET EUROPEEN**

(45) Date de publication et mention
de la délivrance du brevet:
**28.07.2010 Bulletin 2010/30**

(51) Int Cl.:
*F02D 41/40* (2006.01)    *F02B 1/12* (2006.01)

(21) Numéro de dépôt: **06291895.8**

(22) Date de dépôt: **07.12.2006**

(54) **Procédé d'injection de carburant pour moteur à combustion interne, notamment à injection directe, comportant un piston muni d'un bol avec un téton**

Verfahren zur Einspritzung von Kraftstoff für Verbrennungsmotoren, insbesondere mit Direkteinspritzung, umfassend einen Kolben, der mit einer Mulde mit einem Zentrierstift ausgestattet ist

Fuel injection method for an internal combustion engine, in particular with direct injection, comprising a piston equipped with a bowl having a guide pin

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **21.12.2005 FR 0513069**

(43) Date de publication de la demande:
**27.06.2007 Bulletin 2007/26**

(73) Titulaire: **Institut Français du Pétrole 92852 Rueil Malmaison Cedex (FR)**

(72) Inventeur: **Walter, Bruno 92700 Colombes (FR)**

(56) Documents cités:
**EP-A- 0 887 525      EP-A- 0 943 793**
**EP-A- 1 445 461      WO-A-2005/033493**
**US-B1- 6 202 601**

## Description

La présente invention se rapporte à un procédé d'injection de carburant pour moteur à combustion interne, notamment à injection directe, en particulier de type Diesel, avec un piston muni d'un bol comprenant un téton.

Elle concerne plus particulièrement un moteur à injection directe de type Diesel à quatre temps pouvant fonctionner selon deux modes de combustion. Un mode dit homogène, plus connu sous le vocable anglais de "Homogeneous Charge Compression Ignition" (en abrégé H.C.C.I) qui est utilisé pour les faibles et moyennes charges du moteur, avec au moins une injection de carburant pendant la compression. Cette ou ces injections permettent d'obtenir un mélange homogène de carburant avec de l'air ou avec un mélange d'air et de gaz d'échappement recirculés et cela avant le démarrage de la combustion qui se réalise par auto-inflammation. L'autre mode de combustion, dit mode de combustion conventionnel, consiste en une injection du carburant aux environs du point mort haut de la compression et en une combustion par diffusion, ce mode étant préférentiellement utilisé aux charges élevées, comme cela est mieux décrit dans les documents US 6 202 601 et EP 0 943 793.

Un tel type de moteur, comme mieux décrit dans les demandes de brevet français N° 2 818 324, 2 818 325 et 2 827 913 du demandeur, comprend au moins un cylindre, un piston coulissant dans ce cylindre, une chambre de combustion délimitée sur un côté par la face supérieure du piston comprenant un téton disposé au centre d'un bol concave et au moins un injecteur pour injecter du carburant avec un angle de nappe inférieur ou égal à $2 Arctg \dfrac{CD}{2F}$ où CD est le diamètre du cylindre et F la distance entre le point d'origine des jets de carburants issus de l'injecteur et la position du piston correspondant à un angle de vilebrequin de 50° par rapport au point mort haut.

Ainsi, le carburant ne vient pas au contact de la paroi du cylindre et peut se mélanger avec l'air ou le mélange d'air et de gaz brûlés recirculés présent dans la chambre de combustion.

Cette disposition, bien que donnant satisfaction, présente quelques inconvénients non négligeables. Ainsi, en mode de combustion conventionnel, le carburant est injecté lorsque le piston se trouve au voisinage du point mort haut de la phase de compression. Dans cette situation et compte tenu du faible angle de nappe de jets, ce carburant, qui est sous forme diphasique vapeur-liquide, glisse le long de la paroi du téton, arrive dans le fond du bol et est guidé par la paroi latérale de ce bol pour aboutir dans la chambre de combustion. Plus particulièrement, ce carburant est dirigé, d'une part, dans la zone de chasse qui se trouve au dessus du piston et, d'autre part, vers le centre de ce bol.

Compte tenu de ce cheminement du carburant, celui-ci peut se mélanger difficilement avec l'air présent dans le bol et la richesse maximale atteinte pour le fonctionnement du moteur peut rester faible par rapport à des moteurs conventionnels utilisant des injecteurs à fort angle de nappe de jets de carburant, généralement de l'ordre de 140°. Cela se traduit par une mauvaise utilisation de l'air contenu dans la chambre de combustion et notamment au niveau de la chasse.

De plus, le téton est fortement sollicité thermiquement par l'énergie dégagée lors de la combustion et des zones à hautes températures se localisent sur celui-ci et plus particulièrement au voisinage de son sommet.

La présente invention se propose de remédier aux inconvénients ci-dessus grâce à un procédé d'injection de carburant en deux étapes permettant d'assurer un mélange approprié du carburant avec l'air contenu dans le bol.

A cet effet, la présente invention concerne un procédé pour injecter du carburant dans la chambre de combustion d'un cylindre d'un moteur à combustion interne quatre temps à injection directe, notamment de type Diesel, pouvant fonctionner selon un mode de combustion homogène et selon un mode de combustion conventionnel, caractérisé en ce qu'il consiste, pour le mode de combustion conventionnel du moteur, à introduire dans cette chambre, en début de phase d'admission, une première quantité de carburant pour des positions du piston correspondant de 0° à 50° d'angle de vilebrequin au voisinage du point mort haut du piston et une autre quantité de carburant au voisinage du point mort haut de ce piston en fin de phase de compression et en ce qu'il consiste à introduire, pour la première quantité de carburant, entre 2% et 10% de la quantité globale de carburant introduite pour les phases d'admission et de compression.

Avantageusement, ce procédé peut consister à introduire la première quantité de carburant en au moins une injection.

Les autres caractéristiques et avantages de l'invention vont apparaître à la lecture de la description qui va suivre, donnée à titre uniquement illustratif et non limitatif, et à laquelle sont annexées :

- la figure 1 qui montre un moteur à combustion interne utilisant le procédé selon l'invention et
- la figure 2 qui montre le moteur de la figure 1 selon une deuxième configuration durant le procédé selon l'invention.

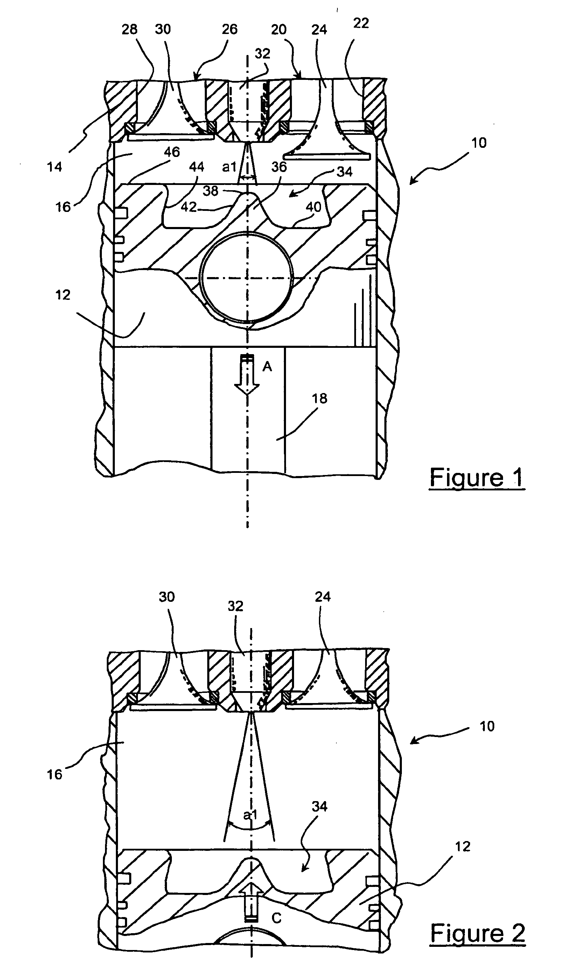

Le moteur de la figure 1 est un exemple non limitatif illustrant un type de moteur à combustion interne à quatre temps, notamment de type Diesel, pouvant fonctionner selon deux modes de combustion, un mode homogène et un mode conventionnel.

Ce moteur comprend au moins un cylindre 10, un piston 12 qui coulisse à l'intérieur de ce cylindre dans un mouvement rectiligne alternatif et une culasse 14 venant fermer le haut du cylindre. Ce piston délimite avec la paroi latérale du cylindre et la surface de la culasse en vis-à-vis, une chambre de combustion 16 à l'intérieur de laquelle peut se réaliser la combustion d'un mélange carburé lorsque les conditions d'une telle combustion sont réunies. Ce piston est relié par l'intermédiaire d'une bielle 18 à un vilebrequin (non représenté) et oscille donc sous l'impulsion de ce vilebrequin entre une position haute, dite point mort haut (PMH), pour laquelle la chambre de combustion occupe un volume réduit et une position basse, dite point mort bas (PMB), où le volume de la chambre de combustion est le plus important.

Dans la suite de la description il est fait mention de position de piston au point mort haut et au point mort bas et cela correspond bien évidemment à des angles de vilebrequin allant généralement de 0° à 180° pour le mouvement du piston du PMH vers le PMB.

Sur la figure 1, la culasse porte au moins un moyen d'admission 20 avec une tubulure d'admission 22 contrôlée par un moyen d'obturation, tel qu'une soupape d'admission 24, au moins un moyen d'échappement 26 avec une tubulure d'échappement 28 des gaz brûlés également contrôlée par un moyen d'obturation, tel qu'une soupape d'échappement 30, et un injecteur de carburant 32, de préférence multi-jets, permettant d'introduire du carburant à l'intérieur de la chambre de combustion 16. Préférentiellement, cet injecteur fait partie d'un moyen d'injection, avec une rampe d'injection et une pompe par exemple, qui est contrôlé par tous moyens et notamment par le calculateur-moteur (non représenté) que comporte habituellement un tel moteur.

La chambre de combustion est donc délimitée par la face interne de la culasse 14, la paroi circulaire du cylindre 10 et la face supérieure du piston 12.

Cette face supérieure du piston comporte un bol concave 34 à l'intérieur duquel s'élève, vers la culasse 14, un téton 36 qui se situe au centre de ce bol.

Le téton, de forme générale tronconique, comporte un sommet 38, de préférence arrondi, se poursuivant, en direction du fond 40 du bol, par un flanc incliné 42 sensiblement rectiligne, puis, à partir de ce fond, par une paroi latérale inclinée 44, sensiblement rectiligne et inclinée en direction de ce téton, rejoignant une surface sensiblement horizontale 46 de la face supérieure du piston.

L'injecteur de carburant est de type à faible angle de nappe de jets $a_1$ et est choisi pour que la paroi du cylindre 10 ne soit jamais mouillée par le carburant pour toute position du piston 12 comprise entre + 50° et +$\alpha$ ou entre -50° et -$\alpha$, où $\alpha$ représente l'angle du vilebrequin pour la phase d'injection choisie par rapport au point mort haut (PMH), cet angle $\alpha$ étant supérieur à 50° et inférieur ou égal à 180°.

Si CD désigne le diamètre (en mm) du cylindre 10 et F la distance (en mm) entre le point d'origine des jets de carburants et la position du piston correspondant à un angle de vilebrequin de 50°, alors l'angle de nappe $a_1$

(en degré) sera inférieur ou égal à $2\,Arctg\,\dfrac{CD}{2F}$.

Par angle de nappe, il est entendu l'angle au sommet que forme le cône issu de l'injecteur 32 et dont la paroi périphérique fictive passe par tous les axes des jets de carburant.

Une fourchette angulaire typique pour l'angle de nappe $a_1$ est au plus de 120° et préférentiellement entre 40° et 100°.

Avantageusement, l'angle au sommet du téton est choisi d'une façon telle qu'il soit supérieur à l'angle de nappe $a_1$ des jets de carburant d'une valeur comprise entre 0° et 60° et l'angle d'inclinaison de la paroi latérale 44 du bol 34 est au plus égal à la moitié de l'angle de nappe $a_1$.

Comme cela est largement connu, un tel moteur fonctionne selon quatre temps (ou quatre phases), une phase d'admission avec un mouvement du piston de son point mort haut (PMH) admission vers le point mort bas (PMB) suivie d'une phase de compression avec un mouvement du piston du PMB vers le point mort haut (PMH) compression, puis d'une phase de détente (ou de combustion) avec une course du piston allant du PMH compression vers le PMB et enfin une phase d'échappement au cours de laquelle le piston va du PMB vers le PMH échappement.

En fonctionnement, le calculateur moteur reçoit des signaux des différents capteurs du moteur et du véhicule, comme notamment la vitesse de rotation ou le couple requis par le conducteur lors de l'appui sur la pédale d'accélérateur. En fonction de ces différents signaux, ce calculateur détermine, à partir de cartographies qu'il contient en mémoire, le mode selon lequel doit fonctionner ce moteur ainsi que la quantité totale de carburant à injecter dans la chambre de combustion.

Ainsi, dans le cas d'un fonctionnement de ce moteur en mode conventionnel, lors de la phase d'admission, le piston se trouve au voisinage du PMH admission et a une course allant vers son PMB comme illustré par la flèche A sur la figure 1. Dans cette configuration, la soupape d'admission 24 est en position d'ouverture et de l'air (suralimenté ou non suralimenté) ou un mélange d'air et de gaz d'échappement recirculés (EGR) est introduit dans la chambre de combustion 16. Le calculateur-moteur commande l'injecteur 32 de façon à introduire une première quantité déterminée de carburant pendant le début de cette phase d'admission et préférentiellement pendant une course de piston correspondant à un angle de vilebrequin allant de 0° à 50°. Avantageusement, l'introduction de cette quantité de carburant est subdivisée en une multiplicité d'injections successives pouvant être de quantités égales ou différentes tout en étant réparties de manière régulière ou irrégulière pendant la course du piston correspondant à la plage de débattement de 0° à 50° d'angle de vilebrequin. De manière avantageuse, cette première quantité de carburant représente de 2 à 10% de la quantité totale de carburant injecté.

De par cette injection (ou ces injections successives) et la proximité du bol en regard de l'injecteur, le carburant non seulement glisse le long de la paroi 42 du téton 36 mais aussi balaye le volume creux du bol 34 en assurant ainsi un meilleur mélange entre l'air présent dans ce bol et le carburant injecté. De plus, cette injection (ou ces injections) permet de loger du carburant dans des zones de la chambre de combustion qui sont habituellement difficiles à atteindre, notamment lors de l'injection de carburant au PMH compression, comme par exemple au dessus du téton. Grâce à cela une meilleure utilisation de l'air contenu dans la chambre est réalisée et la richesse de fonctionnement peut être augmentée ainsi que la puissance du moteur. Il est à noter que le piston reste à une température suffisamment élevée pour participer à l'évaporation du carburant, ce qui minimise donc le risque que du carburant sous forme liquide adhère aux parois du bol. Ce risque est d'autant plus limité que le mouvement descendant du piston jusqu'à son PMB fait en sorte de décoller ce film liquide de carburant des parois du bol. De plus, en injectant simultanément du carburant avec l'admission de l'air, le carburant absorbe la chaleur contenue dans cet air et le refroidissement de l'air par ce carburant permet d'augmenter le remplissage de la chambre de combustion grâce à une admission d'une plus grande quantité d'air sous un même volume. En outre, le carburant introduit et/ou l'air ainsi refroidi est au contact avec les différentes surfaces du bol et notamment avec le téton, ce qui permet d'assurer le refroidissement de ces surfaces et de limiter l'apparition de points chauds sur ce téton.

Ainsi en arrivant à la position au PMB du piston 12, la chambre de combustion 16 contient un mélange carburé plus ou moins homogène mais de richesse faible du fait des faibles quantités de carburant injectées et l'injection d'une autre quantité de carburant peut se poursuivre comme illustré à la figure 2.

Dans la position illustrée sur cette figure, le moteur est en phase de compression, les soupapes d'admission 24 et d'échappement 30 sont fermées et le piston 12 va de son PMB vers son PMH compression selon la flèche C. Une autre quantité de carburant est introduite dans la chambre de combustion par l'injecteur 32 et ce pendant la phase de remontée du piston vers son PMH. En général, pour des points de fonctionnement à pleines charges et fort régime (de l'ordre de 4000 tr/min), cette injection est réalisée lorsque le piston atteint une position proche du PMH comprise entre 20° et 40° d'angle de vilebrequin et jusqu'au-delà de ce PMH, de manière à ce que les propriétés physico-chimiques du mélange carburé soient telles qu'elles permettent l'auto-inflammation de ce mélange carburé au voisinage du PMH et lors de la phase de détente qui suit cette phase de compression. Comme cela est connu par l'homme du métier, cette position du piston pour l'injection de carburant est dépendante de nombreux paramètres, comme le taux de compression du moteur, la vitesse et la charge de ce moteur, la pression de l'air à l'admission, la pression maximale admissible à l'intérieur des cylindres, la température maximale des gaz d'échappement,...

La première quantité de carburant introduite dans la chambre de combustion va de 2% à 10% de la quantité totale de carburant introduite dans cette chambre lors des phases d'admission et de compression. De manière préférentielle, cette première quantité de carburant correspond à environ 5% de cette quantité totale.

La présente invention n'est pas limitée à l'exemple de réalisation décrit mais englobe tous équivalents ou variantes.

## Revendications

1.  Procédé pour injecter du carburant dans la chambre de combustion (16) d'un cylindre d'un moteur à combustion interne quatre temps à injection directe, notamment de type Diesel, pouvant fonctionner selon un mode de combustion homogène et selon un mode de combustion conventionnel, **caractérisé en ce qu'**il consiste, pour le mode de combustion conventionnel du moteur, à introduire dans cette chambre, en début de phase d'admission, une première quantité de carburant pour des positions du piston correspondant de 0° à 50° d'angle de vilebrequin au voisinage du point mort haut du piston et une autre quantité de carburant au voisinage du point mort haut de ce piston en fin de phase de compression et **en ce qu'**il consiste à introduire, pour la première quantité de carburant, entre 2% et 10% de la quantité globale de carburant introduite pour les phases d'admission et de compression.

2.  Procédé selon la revendication 1, **caractérisé en ce qu'**il consiste à introduire la première quantité de carburant en au moins une injection.

## Claims

1.  A method for injecting fuel into the combustion chamber (16) of a direct-injection four-stroke internal combustion engine, particularly of the Diesel type, able to operate in a homogenous combustion mode and in a conventional combustion mode, **characterised in that**, for the conventional combustion mode of the engine, it consists in introducing into this chamber, at the start of the intake phase, a first quantity of fuel for positions of the corresponding piston of 0° to 50° of crankshaft angle adjacent the top dead centre of the piston and another quantity of fuel adjacent the top dead centre of this piston at the end of the compression phase and **in that** it consists in introducing, for the first quantity of fuel, between 2% and 10% of the overall quantity of fuel introduced for the intake and compression phases.

2. The method according to claim 1, **characterised in that** it consists in introducing the first quantity of fuel in at least one injection.

## Patentansprüche

1. Verfahren zum Einspritzen von Kraftstoff in die Verbrennungskammer (16) eines Zylinders einer Viertakt-Brennkraftmaschine mit Direkteinspritzung, insbesondere nach Art eines Dieselmotors, die in einer homogenen Verbrennungsbetriebsart und in einer herkömmlichen Verbrennungsbetriebsart funktionieren kann, **dadurch gekennzeichnet, dass** es für die herkömmliche Verbrennungsbetriebsart des Motors darin besteht, in diese Kammer zu Beginn der Ansaugphase eine erste Kraftstoffmenge für Kolbenpositionen, die von einem Kurbelwellenwinkel von 0° bis 50° in der Nähe des oberen Totpunktes des Kolbens entsprechen und eine andere Kraftstoffmenge in der Nähe des oberen Totpunktes dieses Kolbens am Ende der Verdichtungsphase einzuführen, und dass es darin besteht, für die erste Kraftstoffmenge zwischen 2 % und 10 % der gesamten Kraftstoffmenge, die für die Ansaug- und Verdichtungsphasen eingeführt wird, einzuführen.

2. Verfahren nach Anspruch 1, **dadurch gekennzeichnet, dass** sie darin besteht, die erste Kraftstoffmenge in mindestens einer Einspritzung einzuführen.

EP 1 801 398 B1

Figure 1

Figure 2

6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6202601 B
- EP 0943793 A
- FR 2818324
- FR 2818325
- FR 2827913